# EUROPEAN PATENT SPECIFICATION

(11) **EP 0 657 913 B1**
(45) Date of publication and mention of the grant of the patent: **01.09.1999**
(21) Application number: 94119520.8
(22) Date of filing: 09.12.1994
(51) Int. Cl.: H01J 29/00

(54) **Cathode ray tube comprising terrestrial magnetism sensors**
Elektronenstrahlröhre mit erdmagnetismussensoren
Tube à rayons cathodiques muni de capteurs de magnétisme terrestre

(30) Priority: 10.12.1993 JP 31060193
(43) Date of publication of application: 14.06.1995
(73) Proprietor: SONY CORPORATION, Tokyo (JP)
(72) Inventor: Kume, Hisao, c/o Sony Corporation, Shinagawa-ku, Tokyo (JP); Hosokawa, Hiromu, c/o Sony Corporation, Shinagawa-ku, Tokyo (JP); Watanabe, Minoru, c/o Sony Corporation, Shinagawa-ku, Tokyo (JP); Takayanagi, Kenichiro, c/o Sony Corporation, Shinagawa-ku, Tokyo (JP)
(74) Representative: Müller, Frithjof E., Dipl.-Ing.

(56) References cited:
- EP-A- 0 039 502
- EP-A- 0 262 614
- EP-A- 0 396 381
- EP-A- 0 421 592
- DE-A- 3 935 710
- FR-A- 2 629 635
- US-A- 2 921 226
- US-A- 3 887 833
- US-A- 5 066 891
- PATENT ABSTRACTS OF JAPAN vol. 7, no. 251 (E-209) (1396) 8 November 1983 & JP-A-58 138 191 (MITSUBISHI DENKI K.K.) 16 August 1983

## Description

### BACKGROUND OF THE INVENTION

### Field of the Invention:

The present invention relates to a cathode ray tube apparatus having a cathode ray tube, such as a television picture tube or a display tube used by an information terminal device for displaying characters and graphics and, more particularly, is directed to a cathode ray tube apparatus in which a beam landing drift and a drift of image distortion caused by influence of terrestrial magnetism can be corrected.

### Description of the Related Art:

In a cathode ray tube apparatus, such as a television receiver or display apparatus having a color cathode ray tube (referred to hereinafter as "CRT" when necessary) with a color selection mask, such as an aperture grille or shadow mask, it is known that beam landing and image distortion are affected by terrestrial magnetism.

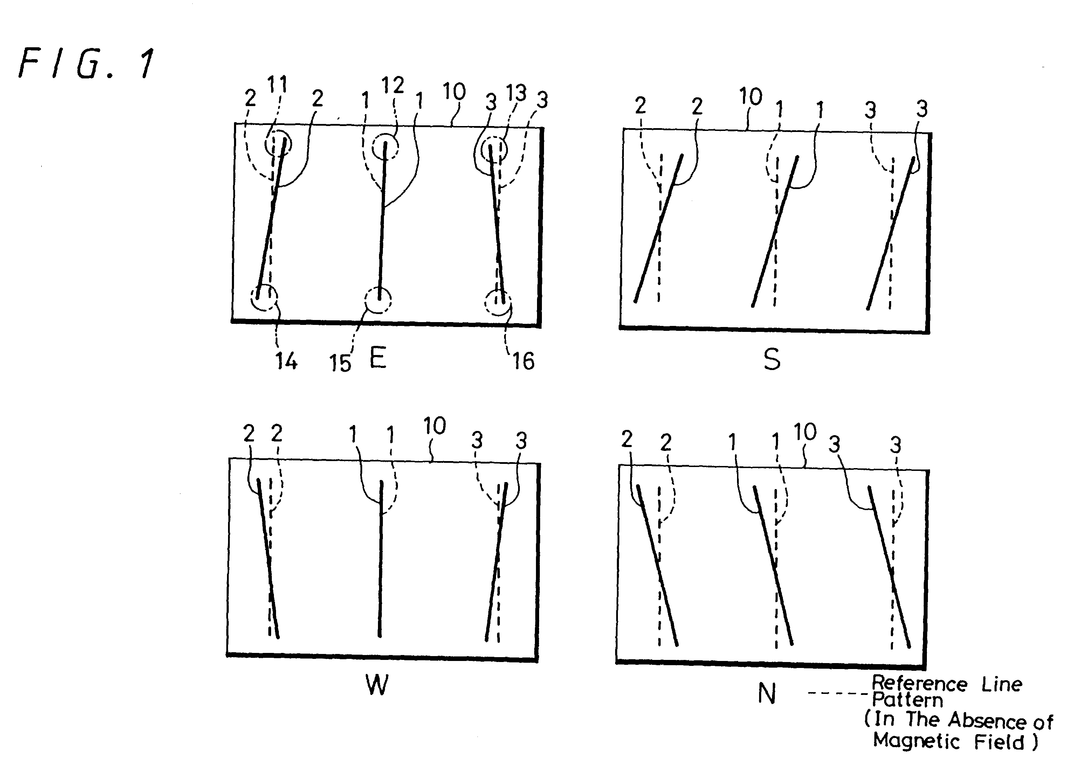

FIGS. 1 to 3 of the accompanying drawings show measured results of beam landing drift caused by terrestrial magnetism.

FIG. 1 shows measured results of drifts of landing patterns 1, 2 and 3 obtained when a face plate 10 of a cathode ray tube is faced to the direction East (E), the direction South (S), the direction West (W) and the direction North (N), respectively. Dotted line patterns in FIG. 1 depict reference line patterns obtained when there is no terrestrial magnetism, i.e., when there is no external magnetic field. Solid line patterns in FIG. 1 depict practical patterns changed by the terrestrial magnetism. When the face plate 10 of the cathode ray tube is faced to the direction East (E) and the direction West (W), the center patterns are placed at the same position in which the reference line pattern 1 obtained in the absence of the terrestrial magnetism and the practical pattern 1 overlap each other.

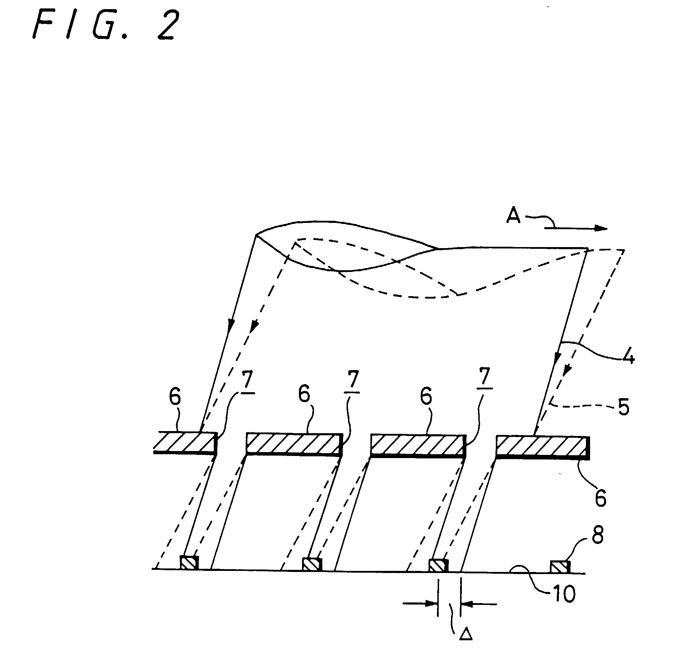

FIG. 2 shows a beam landing drift amount Δ obtained between a particular color beam 4 shown by a solid line and a beam 5 shown by a dashed line when the beam 4 is displaced in the direction shown by an arrow *A*. Specifically, the beams 4 and 5 bombards a fluorescent substance 8 of a particular color coated on the face plate 10 through an opening (slit or hole) in a color selection mask 6. In order to obtain a satisfactory color purity, it is an indispensable condition that a particular color beam, e.g., a green beam 4 should bombard the fluorescent substance 8 of particular color.

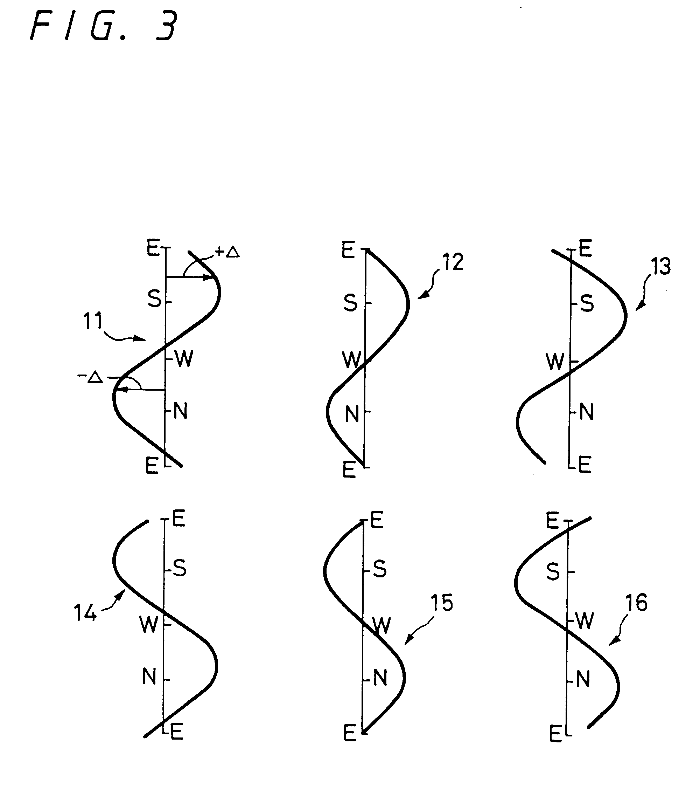

FIG. 3 is a diagram showing plotted results of the beam landing drift obtained at six points (see FIG. 1) of the picture screen end portion when the cathode ray tube is rotated one time within the horizontal plane in the magnetic field caused by terrestrial magnetism under the condition that a tube axis of the cathode ray tube is laid in the horizontal direction. Study of FIG. 3 reveals that a beam landing drift amount Δ is regularly changed in a sine wave fashion. In FIG. 3, the beam landing drift amount Δ to the right-hand side as seen from the front surface of the face plate 10 is defined as a positive drift amount +Δ, and the beam landing drift amount Δ to the left-hand side is defined as a negative drift amount -Δ.

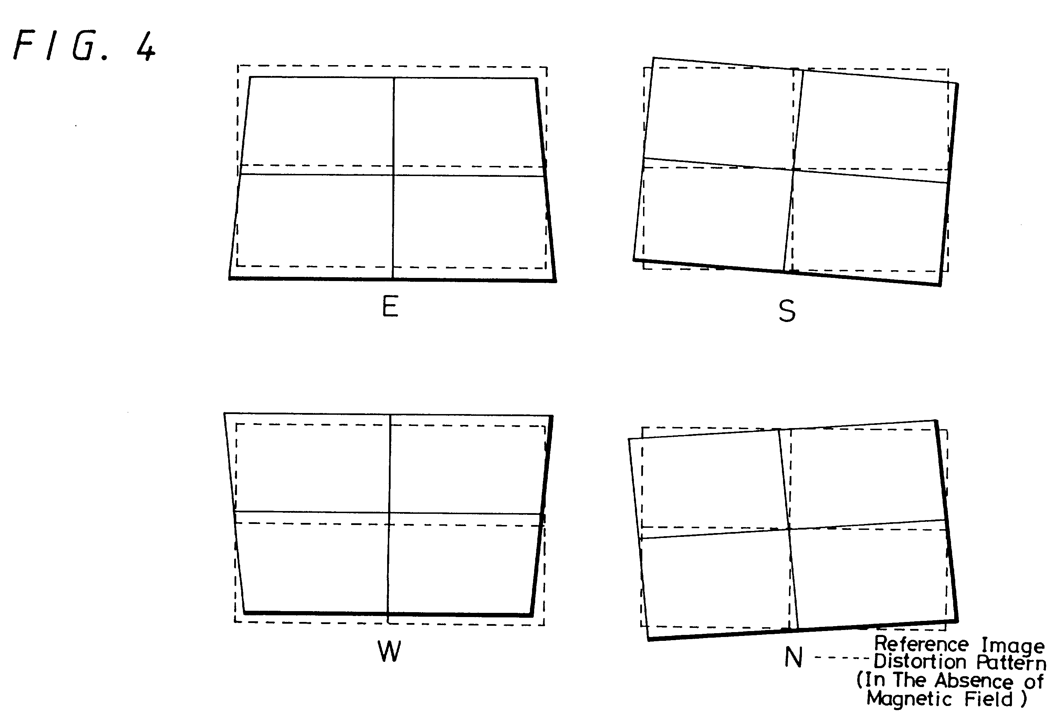

FIG. 4 shows measured results of the changes of image distortion patterns obtained when image distortion patterns are changed by terrestrial magnetism. Specifically, FIG. 4 shows the changes of image distortion patterns obtained when the face plate 10 of the cathode ray tube is faced to the direction East (E), the direction South (S), the direction West (W) and the direction North (N), respectively. Dotted line patterns in FIG. 4 represent reference image distortion patterns obtained in the absence of terrestrial magnetism, i.e., when there is no magnetic field. Solid line image distortion patterns in FIG. 4 represent practical image distortion patterns obtained when the image distortion is changed by terrestrial magnetism.

The beam landing drift and the change of the image distortion patterns due to the terrestrial magnetism become factors which deteriorate characteristics, such as color purity and pattern distortion of the cathode ray tube apparatus.

In order to reduce the factors under which characteristics are deteriorated by the terrestrial magnetism, there are proposed the following three techniques:
(1) Technique for reducing such factors by a magnetic shield (magnetic shield plate);
(2) Technique for reducing such factors by a degauss coil; and
(3) Technique for reducing such factors by a correction coil.

The above three techniques (1) to (3) will be described below, respectively.

### (1) Reduction technique based on a magnetic shield:

As a reduction technique based on a magnetic shield, there are known a CRT external magnetic shield technique and a CRT internal magnetic shield technique. According to the magnetic shield technique, a magnetic field generated by terrestrial magnetism to influence electron beams is weakened so that the beam landing drift amount and the changed amount of the image distortion can be reduced.

### (2) Reduction technique based on a degauss coil:

This reduction technique based on a degauss coil is a technique used together with the (1) reduction technique based on a magnetic shield. According to this reduction technique, a degauss coils is attached to the tube side wall of the CRT and the degauss coil is supplied with an AC attenuation current, whereby the magnetic shield and the color selection mask are degaussed. Thus, the electron beam proceeds on a predetermined path to thereby reduce the influence of terrestrial magnetism.

### (3) Reduction technique based on a correction coil:

This reduction technique based on a correction coil has hitherto been applied to a picture tube of a television receiver having a wide picture screen of about 25-inch or greater with a small beam landing allowance and a high-definition display tube. Japanese laid-open patent publication No. 4-61590 published on February 27, 1992, for example, describes such reduction technique based on a correction coil.

FIG. 5 is a schematic diagram showing a front arrangement of a cathode ray tube to which the reduction technique based on a correction coil is applied.

FIG. 6 is a schematic block diagram showing a fundamental arrangement of a correction circuit applied to the example shown in FIG. 5.

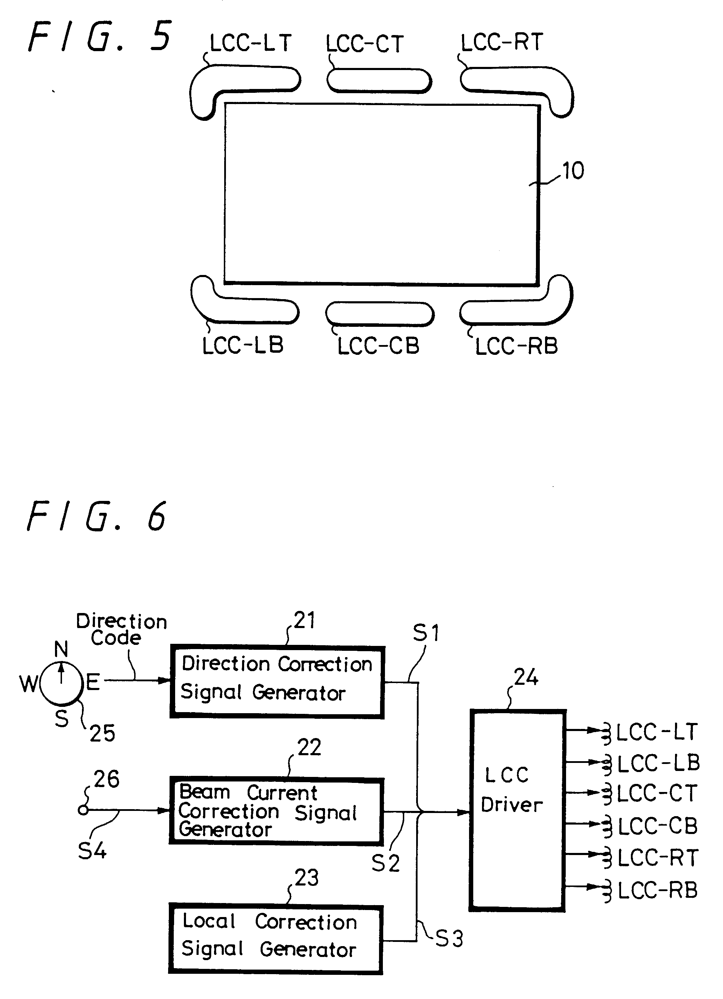

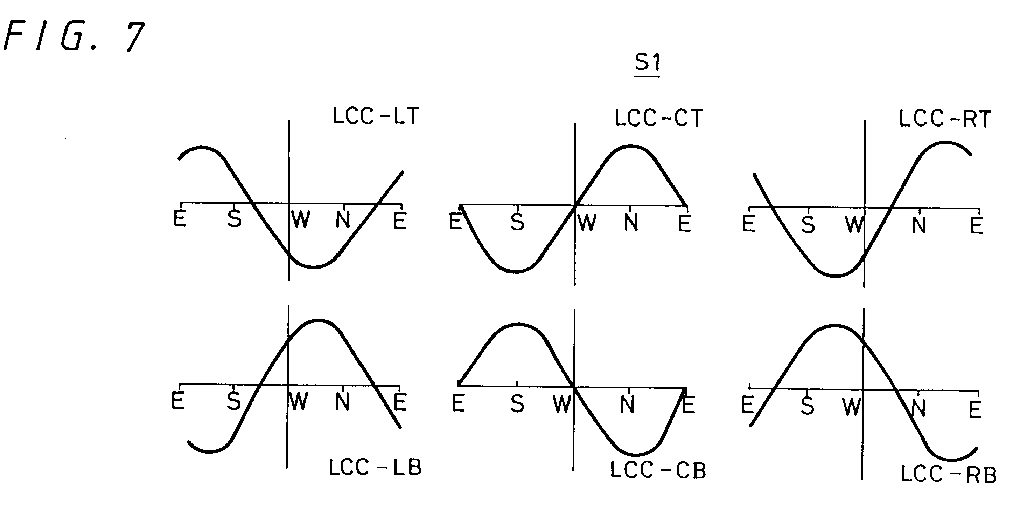

As shown in FIG. 5, as seen from the face plate 10 side of the cathode ray tube, 6 correction coils LCC-LT (landing correction coil left top), LCC-CT (landing correction coil center top), LCC-RT (landing correction coil right top), LCC-LB (landing correction coil left bottom), LCC-CB (landing correction coil center bottom) and LCC-RB (landing correction coil right bottom) are disposed at designated positions around the face plate 10 side.

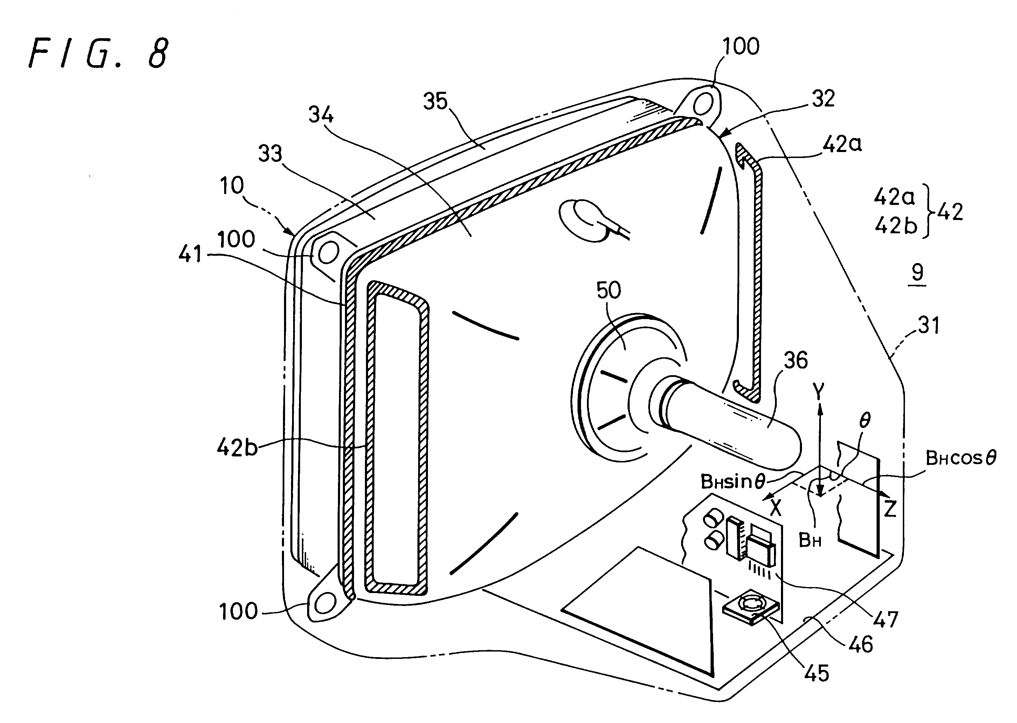

As shown in FIG. 6, the correction coils LCC-LT, LCC-CT, LCC-RT, LCC-LB, LCC-CB and LCC-RB are driven based on a direction correction signal S1 output from a direction correction signal generator 21, a beam current correction signal S2 output from a beam current correction signal generator 22 and a local correction signal S3 output from a local correction signal generator 23 through a landing correction (LCC) driver 24.

The direction correction signal generator 21 generates the direction correction signal S1 which is a current signal corresponding to a direction code designated by a direction code switch 25 disposed on the panel surface of the cathode ray tube apparatus and supplies the same to the respective direction correction coils LCC-LT, LCC-CT, LCC-RT, LCC-LB, LCC-CB and LCC -RB.

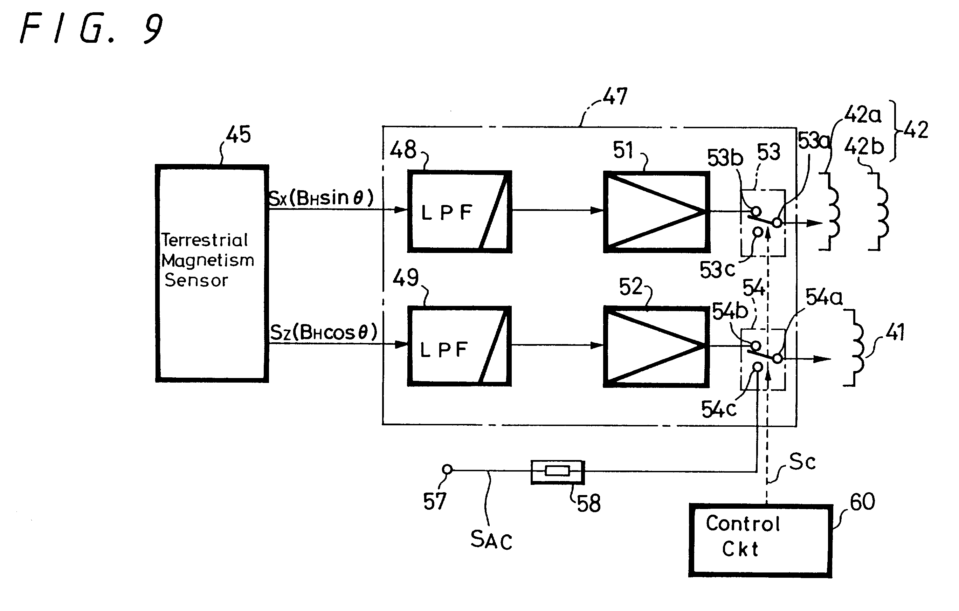

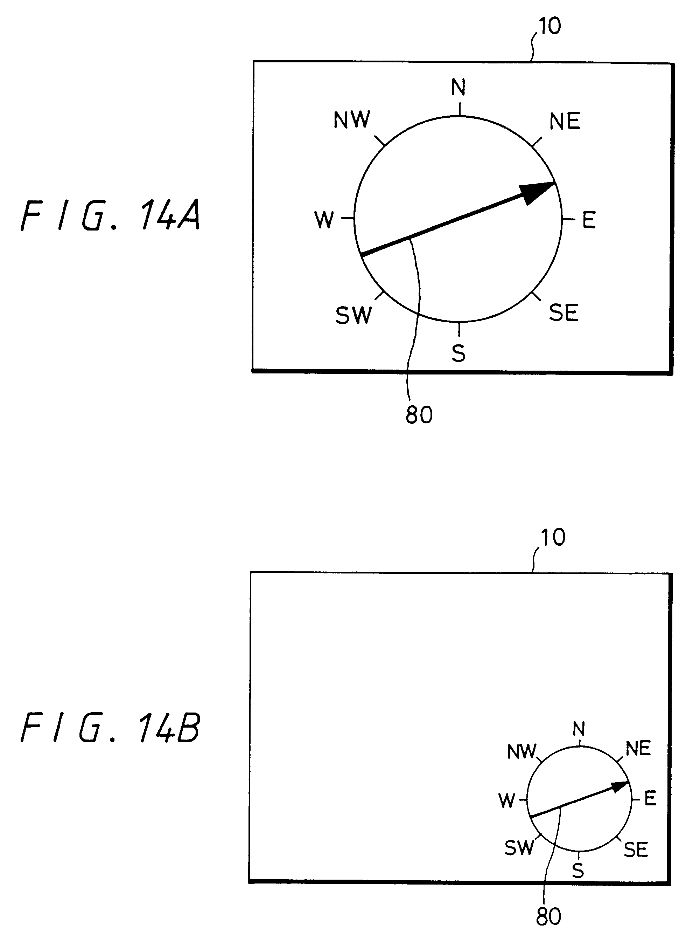

FIG. 7 shows the contents of the direction correction signal S1. Waveforms in FIG. 14 are previously stored in the direction correction signal generator 21 in response to terrestrial magnetism drifts shown in FIG. 3.

Referring back to FIG. 6, the beam current correction signal generator 22 is supplied with an automatic brightness limit (ABL) signal S4 which is a signal of level corresponding to a beam current from a terminal 26. Then, the beam current correction signal generator 22 time-integrates the ABL signal S4 to provide the beam current correction signal S2 used to correct color displacement caused based on a thermal expansion of the color selection mask and supplies the beam current correction signal S2 to the respective direction correction coils LCC-T, LCC-CT, LCC-RT, LCC-LB, LCC-CB and LCC-RB.

The local correction signal generator 23 supplies the local correction signal S3 used to carry out the landing correction peculiar to the CRT to the respective direction correction coils LCC-LT, LCC-CT, LCC-RT, LCC-LB, LCC-CB and LCC-RB.

However, the reduction technique (1) based on a magnetic shield encountered with the following disadvantages:

It is impracticable to shield the whole of the CRT, particularly, the whole of the consumer CRT with an ideal magnetic material, such as permalloy or the like from a money standpoint. Therefore, it is customary that the CRT is partly shielded. As a result, problems of unsatisfactory beam landing and the change of image distortion caused by an imperfect magnetic shield cannot be solved perfectly. Also, there is then the problem that the weight of the cathode ray tube apparatus is increased when a magnetic shield material is used.

The reduction technique (2) based on a degauss coil encountered with the following disadvantages:

Although improvement can be enhanced by increasing a magnetomotive force of the degauss coil, the improvement is of about half at maximum. There is then the problem that the degree of improvement is saturated and limited. Moreover, a degauss coil for providing a large magnetomotive force is increased in amount of copper so that the degauss coil becomes large in size, expensive and heavy.

Further, the reduction technique (3) based on a correction coil encountered with the following disadvantages:

This reduction technique is effective only in correcting the beam landing drift but cannot correct the image distortion drift at all. Moreover, the direction correction coils LCC-LT, LCC-CT, LCC-RT, LCC-LB, LCC-CB, LCC-RB and the direction correction coil driver 24 for driving the correction coils LCC-LT, LCC-CT, LCC-RT, LCC-LB, LCC-CB and LCC-RB are large in scale. There is then the problem that the cathode ray tube apparatus becomes expensive, heavy and complicated in arrangement.

From document DE-A-3935710 a cathode ray tube apparatus is known which comprises sensors for detecting components of the terrestrial magnetic field along a tube-axis direction, a horizontal direction and a vertical direction and supplying the output signals of these sensors to an equal number of correction coils adapted to compensate for the terrestrial magnetic field.

In document US-A-3887833 there is disclosed a color purity adjusting device for a color picture tube, provided with one or more types of correction coils which are wound on the outer periphery of the color picture tube in order to correct any mislanding of an electron beam due to mechanical deformations or to an external magnetic field. The authors also suggest to jointly use these correcting coils with a coil employed for the usual degaussing coil.

### SUMMARY OF THE INVENTION

In view of the aforesaid aspect, it is an object of the present invention to provide a cathode ray tube apparatus in which influences exerted on both of beam landing drift and image distortion by terrestrial magnetism applied to a cathode ray tube (CRT) can be accurately, easily and automatically corrected.

According to the present invention, there is provided a cathode ray tube apparatus according to the features of the appended claim 1.

### BRIEF DESCRIPTION OF THE DRAWINGS

FIG. 1 is a diagram used to explain a landing pattern drift caused by terrestrial magnetism;
FIG. 2 is a diagram used to explain a beam landing drift caused by an incident angle of an electron beam displaced due to terrestrial magnetism;
FIG. 3 is a diagram used to explain the change of terrestrial magnetism drift caused at six points around a face plate of a cathode ray tube;
FIG. 4 is a diagram used to explain an image distortion drift caused by terrestrial magnetism;
FIG. 5 is a diagram used to explain how to reduce a terrestrial magnetism drift by using correction coils;
FIG. 6 is a schematic block diagram showing a fundamental arrangement of a correction circuit which drives the correction coils shown in FIG. 5;
FIG. 7 is a diagram of waveforms of a direction correction signal stored in the direction correction signal generator shown in FIG. 6;
FIG. 8 is a conceptual diagram showing an overall arrangement of a cathode ray tube apparatus according to a first embodiment of the present invention;
FIG. 9 is a circuit diagram showing an electrical arrangement of a correction circuit in the embodiment shown in FIG. 9;

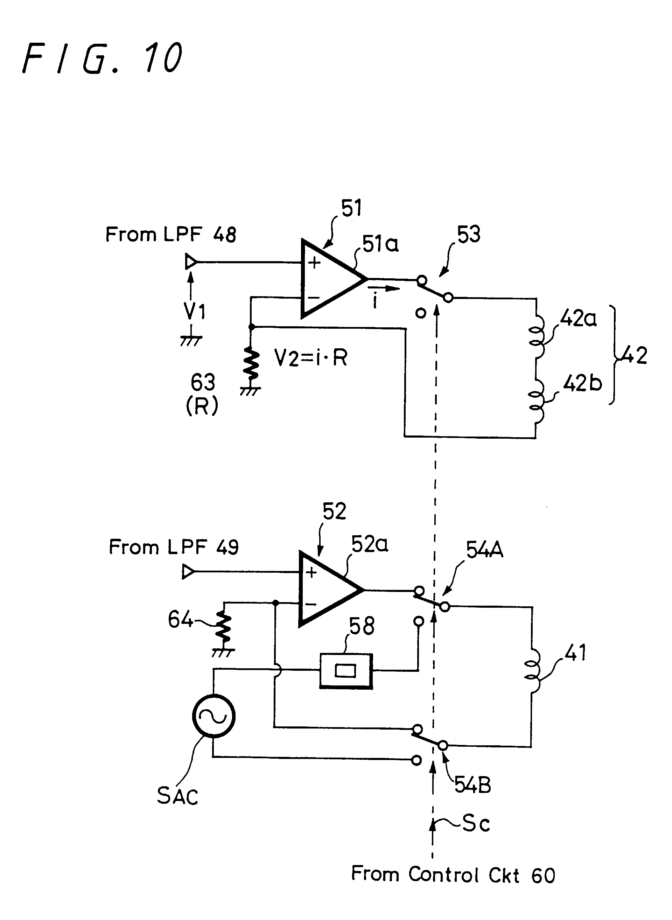

FIG. 10 is a circuit diagram showing arrangements of correction coils and current feedback type amplifiers which drive the correction coils;

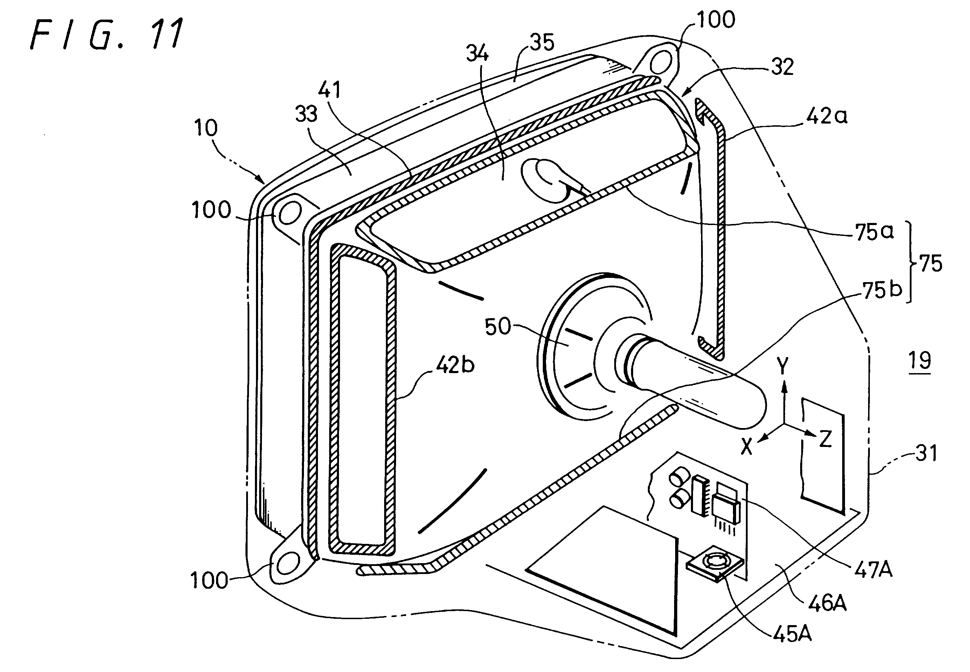

FIG. 11 is a conceptual diagram showing an arrangement of a cathode ray tube apparatus according to a second embodiment of the present invention;

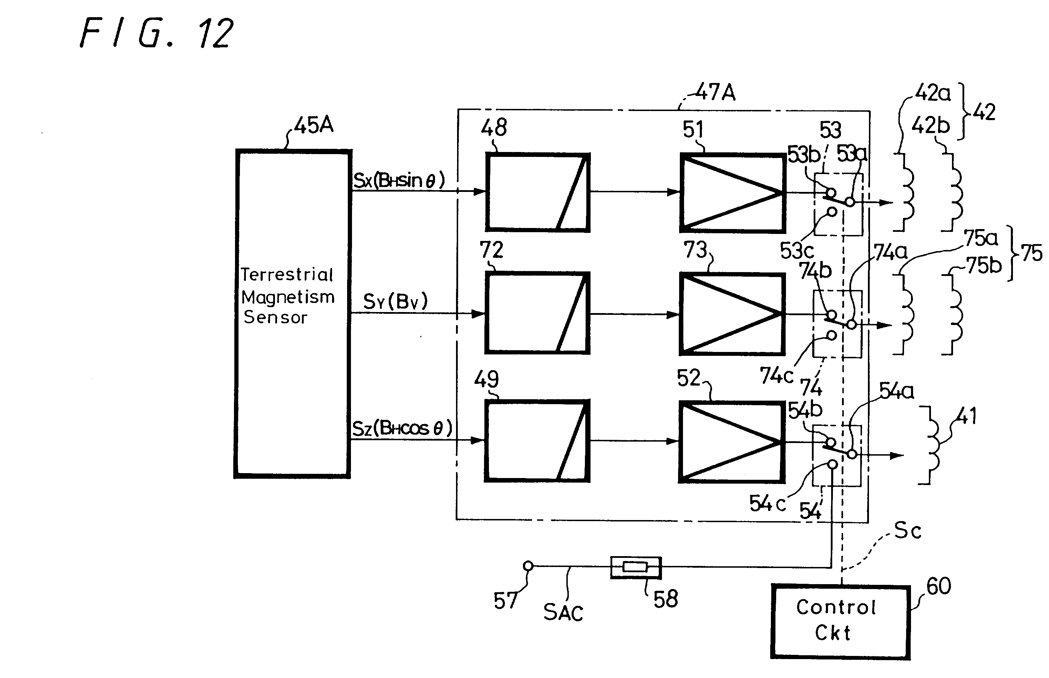

FIG. 12 is a block diagram showing an electrical arrangement of a correction circuit used in the second embodiment shown in FIG. 11;

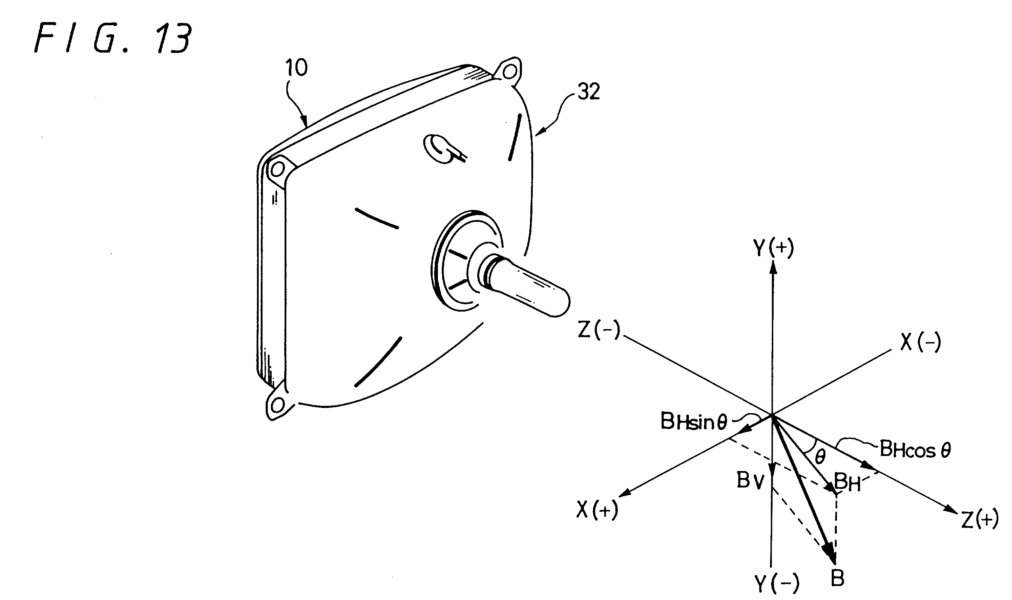

FIG. 13 is s diagram used to explain a relationship between a CRT and a terrestrial magnetism component; and
FIGS. 14A and 14B are diagrams used to explain a face plate direction display function.

### DETAILED DESCRIPTION OF THE PREFERRED EMBODIMENTS

Embodiments of the present invention will hereinafter be described with reference to the drawings. In FIG. 8 and the following sheets of drawings, like parts corresponding to those of FIGS. 1 to 7 are marked with the same references.

FIG. 8 is a conceptual diagram showing an overall arrangement of a cathode ray tube apparatus 9 according to a first embodiment of the present invention. FIG. 9 is a block diagram showing an electrical circuit used in the first embodiment of the present invention.

In the cathode ray tube apparatus 9 in the embodiment shown in FIG. 8, a casing 31 includes a color CRT 32, which is a cathode ray tube, disposed on the front side thereof. A reinforcing band 33 of this color CRT 32 is fixed around a panel portion 35 and the reinforcing band 33 includes holders 100 disposed on it four corners.

A Z-axis correction coil 41 is wound along the reinforcing band 33 and X-X axis correction coils 42 composed of two X-X axis correction coils 42a, 42b are disposed in an opposing relation to the left and right portions of a funnel portion 34.

A terrestrial magnetism sensor 45 is disposed at the position distant from the Z-axis correction coil 41 and the X-X axis correction coils 42, i.e., at the position which is the rearmost position of the housing 31 and which is under a neck portion 36, in other words, on a mother base plate 46 located under an electron gun. The reason that the terrestrial magnetism sensor 45 is disposed at the position distant from the Z-axis correction coil 41 and the X-X axis correction coils 42 is to detect only a terrestrial magnetism component without detecting a magnetic flux from the coils 41, 42.

The terrestrial magnetism sensor 45 detects a terrestrial magnetism applied to the whole of the cathode ray tube apparatus 9 as a terrestrial magnetism signal B_{H} (see FIG. 8 and referred to hereinafter as "terrestrial magnetism B_{H}" for simplicity when necessary) to detect a direction at which the color CRT 32 is disposed, and supplies, as shown in FIG. 9, an X-axis direction terrestrial magnetism detection signal S_{X} (B_{H} sinθ; referred to also as "X-axis terrestrial magnetism component") and a Z-axis direction terrestrial magnetism detection signal S_{Z} (B_{H} cosθ; referred to also as "Z-axis terrestrial magnetism component") to low-pass filters (LPF) 48, 49 constructing a drive base plate 47. The Z-axis direction is a direction which coincides with the horizontal axis direction of the face plate of the color CRT 32. The Y-axis direction is a direction which coincides with the longitudinal direction of the face plate of the color CRT 32.

The terrestrial magnetism sensor 45 can be formed of a well-known terrestrial magnetism sensor and may be formed of a magnetic field measuring apparatus using a flux gate, for example. The magnetic field measuring apparatus is made in view of the fact that a magnetic permeability, loss and magnetic flux of a magnetic material are changed when the magnetic material, such as permalloy or the like, is disposed in a measured magnetic field under the condition that the magnetic material is symmetrically and periodically excited by an alternate time. Accordingly, this magnetic field measuring apparatus makes an effective use of the fact that changed amounts of magnetic permeability, loss and magnetic flux are proportional to magnitude of magnetic field (see "Introduction of Magnetic Engineering" written by Kenji Narita and published by OHMSHA LTD., on July 10, 1965).

The terrestrial magnetism sensor 45 is not limited to the magnetic field measuring apparatus using flux gate and it is possible to use an apparatus which makes an effective use of a Hall element and an apparatus which makes an effective use of a magnetoresistance element.

The LPFs 48, 49 are adapted to cancel an influence of a noise AC magnetic field (leakage magnetic field generated from devices, such as a deflection yoke 50, a flyback transformer, etc.) generated within the cathode ray tube apparatus 9. The X-axis direction terrestrial magnetism detection signal S_{X} (B_{H} sinθ) and the Z-axis direction terrestrial magnetism detection signal S_{Z} (B_{H} cosθ) from which the influence of the noise AC magnetic field was removed are respectively supplied to amplifiers 51, 52. If frequency characteristics of the terrestrial magnetism sensor 45 and (or) amplifiers 51, 52 are set to low-pass characteristics, then it becomes possible to omit the LPFs 48, 49.

The amplifiers 51, 52 supply coil correction currents corresponding to the X-axis direction terrestrial magnetism detection signal S_{X} (B_{H} sinθ) and the Z-axis direction terrestrial magnetism detection signal S_{Z} (B_{H} cosθ) through a fixed contact 53b and a common contact 53a of a switcher 53 and a fixed contact 54b and a common contact 54a of a switcher 54 to the X-X axis correction coil 42 and the Z-axis correction coil 41. Thus, the X-X axis correction coil 42 and the Z-axis correction coil 41 generate magnetic field components which can cancel the terrestrial magnetism components B_{H} sinθ, B_{H} cosθ (see FIG. 8) in the X-axis direction and in the Z-axis direction, i.e., opposite direction magnetic filed (magnetic flux) components which are the same in magnitude substantially within the funnel portion 34. The orientations (directions) of the resultant magnetic fluxes are varied by the winding direction of the correction coils 41, 42 or the like.

The reason that the switchers 53, 54 are provided in the block diagram shown in FIG. 9 is to make the Z-axis correction coil 41 serve both as a correction coil and a degauss coil. An AC voltage S_{AC}, which is supplied through a terminal 57, is supplied to the fixed contact 54b of the switcher 54 through a PTC (a resistor element having a positive temperature coefficient characteristic) 58. When an AC power supply is energized, from a control circuit 60, the switchers 53, 54 are supplied at their switching control terminals with a control signal Sc by which the common contacts 53a, 54a are switched to the fixed contacts 53c, 54c only during a constant time period necessary for degaussing. Therefore, owing to the function of the PTC 58, the Z-axis correction coil 41 is supplied with an AC attenuation vibration degaussing current only during the constant time period.

In this case, during the constant time period when the AC power supply is energized, in other words, during the degaussing operation, the switcher 53 is switched to the fixed contact 53c so that the correction current supplied to the X-X axis correction coil 42 is canceled. Thus, a so-called magnetic transcription effect caused by the X-X axis correction coil 42 is excluded and it is possible to effectively degauss the magnetic member, such as the color selection mask, the internal magnetic shield (the internal magnetic shield may be removed in this embodiment), not shown, with magnetic flux parallel to the tube axis (Z axis) generated by the Z-axis correction coil 41. As the control circuit 60, it is possible to use a microcomputer or a timer using a counter.

As described above, since the amplifiers 51, 52 are adapted to supply coil correction currents proportional to the X-axis direction terrestrial magnetism detection signal S_{X} (B_{H} sinθ) and Z-axis direction terrestrial magnetism detection signal S_{Z} (B_{H} cosθ), it is optimum to use current feedback type amplifiers as the amplifiers 51, 52.

FIG. 10 is a circuit diagram showing the amplifiers 51, 52 each composed of the current feedback type amplifier in detail. In FIG. 10, reference symbol *i* assumes a current supplied from an operational amplifier 51a constructing the amplifier 51 to the series-connected X-X axis correction coils 42 (42a, 42b), V1 assumes a voltage developed at a positive input terminal of the operational amplifier 51, and V2 = i x R (R is a resistance value of a resistor 63) developed at a negative input terminal of the operational amplifier 51. Then, a feedback is effected so as to cancel a difference of voltages developed between the positive and negative input terminals of the operational amplifier 51a. Therefore, the current feedback type amplifier is used in order to determine the coil correction current *i* by i = V1/R with ease. As shown in FIG. 10, on the Z-axis correction coil 41 side, the current feedback type amplifier is constructed by mutual connection of the operational amplifier 52a, a resistor 64, switchers 54A, 54B or the like.

As shown in FIG. 10, the left and right two X-X axis correction coils 42a, 42b are electrically connected in series (may be electrically connected in parallel) and driven only by the operational amplifier 51a. The X-X axis correction coil 42 generates horizontal (extended along the horizontal axis of the face plate) parallel magnetic flux in the inside of the funnel portion 34.

As described above, according to the first embodiment shown in FIGS. 8 to 10, although the cathode ray tube apparatus 9 is rotated at any angle within the horizontal plane, the beam landing drift and the image distortion drift can automatically be corrected to optimum ones. Although no countermeasure is taken for the vertical direction terrestrial magnetism component, it is customary that cathode ray tubes are adjusted in accordance with destinations and shipped by the production lines of factory in which the vertical direction terrestrial magnetism component is deliberately set and considered. Therefore, it is sufficient to carry out the correction of two axes of the X axis and the Z axis. The beam landing drift and the image distortion drift caused by the change of the vertical direction terrestrial magnetism component are simple ones, i.e., moved in parallel to the horizontal axis direction of the face plate 10.

FIG. 11 is a conceptual diagram showing an overall arrangement of a cathode ray tube apparatus 19 according to a second embodiment of the present invention in which a correction of a vertical direction component of terrestrial magnetism also is taken into consideration.

FIG. 12 is a block diagram showing an electrical circuit used in the second embodiment of the present invention.

In FIGS. 11 and 12, like parts corresponding to those of FIGS. 8 to 10 are marked with the same references and therefore need not be described in detail.

In the second embodiment shown in FIGS. 11 and 12, in addition to the Z-axis correction coil 41 wound along the reinforcing band 33 and the X-X axis correction coil 42 composed of the two X-X axis correction coils 42a, 42b disposed on the left-hand side and right-hand side of the funnel portion 34, there is provided a Y-Y axis correction coil 75 composed of two Y-Y axis correction coils 75a, 75b which are opposed to each other in the upper and lower direction of the funnel portion 34. The Y-Y axis correction coils 75a, 75b are driven by a single drive source (amplifier 73) and electrically connected in series or in parallel to each other.

FIG. 13 is a diagram used to explain a terrestrial magnetism component detected by the terrestrial magnetism sensor 45A according to the second embodiment shown in FIGS. 11 and 12. The terrestrial magnetism sensor 45A detects a terrestrial magnetism *B* applied to the whole of the cathode ray tube apparatus 19 as a horizontal plane terrestrial magnetism signal B_{H} and a vertical plane terrestrial magnetism signal B_{V}. As described above, the horizontal plane terrestrial magnetism signal B_{H} is analyzed into the X-axis direction terrestrial magnetism detection signal S_{X} (B_{H} sinθ) and the Z-axis direction terrestrial magnetism detection signal S_{Z} (B_{H} cosθ) and then output from the terrestrial magnetism sensor 45A. Further, the vertical plane terrestrial magnetism signal B_{V} is output as a Y-axis direction terrestrial magnetism signal B_{V} (also referred to as "Y-axis terrestrial magnetism component") and supplied through a low-pass filter 72, an amplifier 73 and a switcher 74 to the Y-Y axis correction coil 75. When these correction coils 41, 42 and 75 generate corresponding magnetic fluxes which are used to cancel respective terrestrial magnetism components in the direction opposite to the terrestrial magnetism components, the beam landing drift and the image distortion drift can be corrected. Incidentally, it is possible to form the terrestrial magnetism sensor 45A by using the flux gate or the like with ease.

While the Z-axis correction coil 41 is served both as the correction coil and the degauss coil as described above in the second embodiment shown in FIGS. 11 and 12, the present invention is not limited thereto and the following variant also is possible. For example, when the Y-Y axis correction coil 75 is served both as the correction coil and the degauss coil, this is particularly effective for CRTs having an aperture grille with a stripe structure of vertical axis (Y axis) and a color selection mask such as a slot mask or the like.

As described above, according to the second embodiment shown in FIGS. 11 and 12, since orthogonal three-axis (X-axis, Z-axis and Y-axis) components of the terrestrial magnetism *B* are detected and the beam landing drift and the image distortion drift can be corrected, it is possible to completely and automatically correct the beam landing drift and the image distortion drift regardless of the direction to which the cathode ray tube apparatus 19 is faced. Therefore, the present invention is particularly suitable as being applied to a cathode ray tube apparatus mounted within an airplane or vehicle which can be moved in a long distance, a cathode ray tube apparatus having a tilt-swivel mechanism or a cathode ray tube apparatus whose sales area is not specified.

In this case, the terrestrial magnetism sensors 45, 45A, the correction coils 41, 42 and 75 and the relating circuits which are used to correct the beam landing drift and the image distortion drift according to the embodiments of the present invention can be simplified in arrangement and reduced in weight as compared with those using the magnetic shield mechanism and the degauss coil. Therefore, the cathode ray tube apparatus can be reduced in weight and can become inexpensive on the whole.

It is possible to calculate the direction of the terrestrial magnetism B_{H} by adding the output signal of the LPF 48 and the output signal of the LPF 49 by using a calculation apparatus (not shown), such as a microcomputer or the like, in a vector fashion. Then, on the basis of the calculated result, it is possible to display the direction of the cathode ray tube apparatus 9, 19 on the face plate 10 in a superimposed fashion on a picture instead of the picture displayed on the face plate 10. It is needless to say that the direction can be displayed without calculation if a ROM (read-only memory) is used as a look-up table.

FIGS. 14A and 14B are diagrams showing displayed examples of the directions of the terrestrial magnetisms on the face plate 10 (in FIGS. 14A and 14B, reference symbols N, E, S and W represent ordinary direction displays). In FIGS. 14A and 14B, a direction shown by an arrow 80 represents the terrestrial magnetism direction (east-northeast in the illustrated examples). FIG. 14A shows the state that the terrestrial magnetism direction is displayed on the whole of the face plate 10, and FIG. 14B shows the state that the terrestrial magnetism direction is displayed on the corner of the face plate 10. If the terrestrial magnetism direction is displayed as shown in FIGS. 14A and 14B, then it is possible to confirm the operated state of the terrestrial magnetism drift automatic correction. Alternatively, the cathode ray tube apparatus according to the present invention can be used as an electronic compass when the cathode ray tube apparatus is mounted on the vehicle.

As described above, according to the embodiments of the present invention, since the detected outputs of the orthogonal two-axis components (X-axis and Z-axis) or orthogonal three-axis components (X-axis, Z-axis and Y-axis) of the terrestrial magnetism *B* detected by the terrestrial magnetism sensors 45, 45A disposed within the cathode ray tube apparatus 9, 19 are amplified in current to drive a plurality of correction coils 41, 42 and 75 disposed around the color CRT 32, the following various effects can be achieved:
It is possible to completely and automatically correct the peculiar beam landing drift and the image distortion drift caused by the terrestrial magnetism;
It becomes possible to simplify the magnetic shield and the degauss coil. Thus, the cathode ray tube apparatus can be made light in weight and inexpensive;
Since the beam landing clearance of the CRT itself can be reduced, designing and manufacturing of CRT can be made easy. Also, since yield of the CRT can be increased, a large-sized high definition cathode ray tube can be manufactured with ease;
Adjustment required when the cathode ray tube apparatus is installed, i.e., installment adjustment can be removed and therefore a distribution cost and a service cost can be reduced;
If the three-axis correction is carried out, then it is possible to render the cathode ray tube apparatus a tile-swivel function of a wide range; and
   It is possible to add a new function, such as to display a direction on the face plate or the like, to the cathode ray tube apparatus.

As described above, according to the present invention, a terrestrial magnetism of at least one axis direction of the tube-axis direction, the horizontal-axis direction and the longitudinal-axis direction of the face plate of the cathode ray tube is detected by the terrestrial magnetism sensor and the terrestrial magnetism signal thus detected is output to the correction coils of at least one axis direction. Therefore, it is possible to reduce the influences exerted on both of the beam landing drift and the image distortion drift by the terrestrial magnetism applied at least to one axis direction of the CRT.

According to the present invention, the terrestrial magnetisms of the tube-axis direction and the horizontal-axis direction of the cathode ray tube are detected by the terrestrial magnetism sensor and the tube-axis direction terrestrial magnetism signal and the horizontal-axis direction terrestrial magnetism signal thus detected are output to the tube-axis direction correction coil and the horizontal-axis direction correction coil, respectively. Therefore, it is possible to reduce the influences exerted on both of the beam landing drift and the image distortion drift by the terrestrial magnetism applied to the tube-axis direction and the horizontal-axis direction of the CRT.

According to the present invention, the terrestrial magnetisms of the tube-axis direction, the horizontal-axis direction and the longitudinal-axis direction are detected by the terrestrial magnetism sensor and the tube-axis direction terrestrial magnetism signal, the horizontal-axis direction terrestrial magnetism signal and the longitudinal-axis direction terrestrial magnetism signal thus detected are output to the tube-axis direction correction coil, the horizontal-axis direction correction coil and the longitudinal-axis direction correction coil, respectively. Therefore, it is possible to reduce the influences exerted on both of the beam landing drift and the image distortion drift by terrestrial magnetisms applied to the tube-axis direction, the horizontal-axis direction and the longitudinal-axis direction of the CRT.

Further, according to the present invention, since the correction coil is served both as the correction coil and the degauss coil, the degauss coil need not be provided as a separate member.

Furthermore, according to the present invention, since the display representing the direction based on the terrestrial magnetism signal is made on the face plate of the CRT, it is possible to know the direction based on the direction display.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

## Claims

1. A cathode ray tube apparatus (9;19) comprising:
a terrestrial magnetism sensor (45;45A) for outputting one or more terrestrial magnetism signals (Sₓ,S_{y},S_{z}) by detecting a terrestrial magnetism of at least one of a tube-axis direction (z), a horizontal-axis direction (x) and a longitudinal-axis direction (y) of a face plate (10) of a cathode ray tube (32); and
one or more correction coils (41,42;75) of at least one of a tube-axis direction, a horizontal-axis direction and a longitudinal-axis direction, said one or more correction coils (41,42;75) being connected to said terrestrial magnetism sensor (45;45A) for receiving respective terrestrial magnetism signals,
**characterized in that**
a correction coil (41) of a tube-axis direction or a correction coil (75) of a longitudinal-axis direction also serves as a degaussing coil by further providing a switcher (54) for selectively switching and supplying an attenuation AC current signal and the respective terrestrial magnetism signal (S_{z}) to said correction coil (41;75).

2. A cathode ray tube apparatus according to claim 1, wherein said terrestrial magnetism sensor (45;45A) outputs a tube-axis direction terrestrial magnetism signal (S_{z}) and a horizontal-axis direction earth magnetism signal (Sₓ) by detecting terrestrial magnetisms of the tube-axis direction (z) and the horizontal-axis direction (x) of said face plate (10) of said cathode ray tube, said one or more correction coils (41,42) of at least one-axis direction include a tube-axis direction correction coil (41) disposed around near a reinforcing band attachment portion (33) and a horizontal-axis direction correction coil (42) horizontally disposed in a funnel portion (34) of said cathode ray tube in an opposing fashion, and said tube-axis direction terrestrial magnetism signal (S_{z}) is supplied to said tube-axis direction correction coil (41) and said horizontal-axis direction terrestrial magnetism signal (Sₓ) is supplied to said horizontal-axis direction correction coil (42).

3. A cathode ray tube apparatus according to claim 1, wherein said terrestrial magnetism sensor (45;45A) outputs a tube-axis direction terrestrial magnetism signal (S_{z}), a horizontal-axis direction terrestrial magnetism signal (Sₓ) and a longitudinal-axis direction terrestrial magnetism signal (S_{y}) by detecting terrestrial magnetisms of a tube-axis direction (z), a horizontal-axis direction (x) and a longitudinal-axis direction (y) of said face plate (10) of said cathode ray tube, said correction coils (41,42;75) of at least one axis direction include a tube-axis direction correction coil (41) disposed around near a reinforcing band attachment portion (33), a horizontal-axis direction correction coil (42) horizontally disposed in a funnel portion (34) of said cathode ray tube in an opposing fashion and a longitudinal-axis direction correction coil (75) vertically disposed in said funnel portion (34) in an opposing fashion, and said tube-axis direction terrestrial magnetism signal (S_{z}) is supplied to said tube-axis direction correction coil (41), said horizontal-axis direction terrestrial magnetism signal (Sₓ) is supplied to said horizontal-axis direction correction coil (42), and said longitudinal-axis direction terrestrial magnetism signal (S_{y}) is supplied to said longitudinal-axis direction correction coil (75).

4. A cathode ray tube apparatus according to claim 1, wherein said cathode ray tube comprises means for displaying on the face plate (10) a direction (80) based on said terrestrial magnetism signal.

## Patentansprüche

1. Kathodenstrahlröhrenanordnung (9; 19) mit:
- einem Erdmagnetismussensor (45; 45A) zum Ausgeben eines oder mehrerer Erdmagnetismussignale (S_{X}, S_{Y}, S_{Z}) durch Erfassen des Erdmagnetismus in mindestens einer der folgenden Richtungen: Richtung der Röhrenachse (Z), Richtung der horizontalen Achse (X) und Richtung der Höhenachse (Y) der Frontplatte (10) einer Kathodenstrahlröhre (32); und
- einer oder mehreren Korrekturspulen (41, 42; 75) für mindestens eine der folgenden Richtungen: Richtung der Röhrenachse, Richtung der horizontalen Achse und Richtung der Höhenachse, wobei die eine oder mehreren Korrekturspulen (41, 42; 75) mit dem Erdmagnetismussensor (45, 45A) verbunden sind, um jeweilige Erdmagnetismussignale zu empfangen;
**dadurch gekennzeichnet**, dass
- eine Korrekturspule (41) für die Richtung der Röhrenachse oder eine Korrekturspule (75) für die Richtung der Höhenachse dadurch auch als Entmagnetisierungsspule wirkt, dass ferner ein Umschalter (54) zum selektiven Schalten und Liefern eines abklingenden Wechselstromsignals und des jeweiligen Erdmagnetismussignals (S_{Z}) an die Korrekturspule (41; 75) vorhanden ist.

2. Kathodenstrahlröhrenanordnung nach Anspruch 1, bei der der Erdmagnetismussensor (45; 45A) ein Erdmagnetismussignal (S_{Z}) in Richtung der Röhrenachse und ein Erdmagnetismussignal (S_{X}) in Richtung der horizontalen Achse dadurch ausgibt, dass er den Erdmagnetismus in der Richtung der Röhrenachse (Z) und der Richtung der horizontalen Achse (X) an der Frontplatte (10) der Kathodenstrahlröhre erfasst, wobei eine oder mehrere Korrekturspulen (41, 42) für die Richtung mindestens einer Achse eine Korrekturspule (41) für die Richtung der Röhrenachse, die nahe einem Verstärkungsband-Befestigungsabschnitt (33) um diesen herum angeordnet ist, und eine Korrekturspule (42) für die Richtung der horizontalen Achse, die in einem Trichterabschnitt (34) der Kathodenstrahlröhre in gegenüberstehender Weise angeordnet ist, beinhalten, und das Erdmagnetismussignal (S_{Z}) in Richtung der Röhrenachse an die Korrekturspule (41) für die Richtung der Röhrenachse geliefert wird, und das Erdmagnetismussignal (S_{X}) in Richtung der horizontalen Achse an die Korrekturspule (42) für die Richtung der horizontalen Achse geliefert wird.

3. Kathodenstrahlröhrenanordnung nach Anspruch 1, bei der der Erdmagnetismussensor (45; 45A) ein Erdmagnetismussignal (S_{Z}) in Richtung der Röhrenachse, ein Erdmagnetismussignal (S_{X}) in Richtung der horizontalen Achse und ein Erdmagnetismussignal (S_{Y}) in Richtung der Höhenachse durch Erfassen des Erdmagnetismus in Richtung der Röhrenachse (Z), der Richtung der horizontalen Achse (X) und der Richtung (Y) der Höhenachse an der Frontplatte (10) der Kathodenstrahlröhre ausgibt, wobei die Korrekturspulen (41, 42; 75) für mindestens eine Achsenrichtung eine Korrekturspule (41), die nahe einem Verstärkungsband-Befestigungsabschnitt (33) um diesen herum angeordnet ist, eine Korrekturspule (42) für die Richtung der horizontalen Achse, die horizontal in einem Trichterabschnitt (34) der der Kathodenstrahlröhre in gegenüberstehender Weise angeordnet ist, und eine Korrekturspule (75) in der Richtung der Höhenachse beinhalten, und das Erdmagnetismussignal (S_{Z}) in Richtung der Röhrenachse der Korrekturspule (41) für die Richtung der Röhrenachse zugeführt wird, das Erdmagnetismussignal (S_{X}) in Richtung der horizontalen Achse der Korrekturspule (42) für die Richtung der horizontalen Achse zugeführt wird und das Erdmagnetismussignal (S_{Y}) für die Richtung der Höhenachse der Korrekturspule (75) für die Richtung der Höhenachse zugeführt wird.

4. Kathodenstrahlröhrenanordnung nach Anspruch 1, bei der die Kathodenstrahlröhre eine Einrichtung zum Anzeigen einer Richtung (80) auf Grundlage des Erdmagnetismussignals auf der Frontplatte (10) aufweist.

## Revendications

1. Appareil (9 ; 19) à tube à rayons cathodiques, comprenant :
un capteur (45 ; 45A) de magnétisme terrestre destiné à transmettre un ou plusieurs signaux de magnétisme terrestre (S_{X}, S_{Y}, S_{Z}) par détection du magnétisme terrestre dans au moins une direction parmi une direction (z) suivant l'axe du tube, une direction (x) d'axe horizontal et une direction (y) d'axe longitudinal d'une plaque avant (10) d'un tube à rayons cathodiques (32), et
une ou plusieurs bobines de correction (41, 42 ; 75) suivant au moins une direction d'axe du tube, une direction d'axe horizontal et une direction d'axe longitudinal, les bobines de correction (41, 42 ; 75) étant connectées au capteur de magnétisme terrestre (45 ; 45A) pour la réception des signaux respectifs de magnétisme terrestre,
caractérisé en ce que :
une bobine de correction (41) de direction d'axe du tube ou une bobine de correction (75) de direction d'axe longitudinal est utilisée comme bobine de démagnétisation par incorporation d'un commutateur (54) qui commute sélectivement et transmet un signal en courant alternatif d'atténuation et le signal respectif de magnétisme terrestre (S_{z}) à la bobine de correction (41 ; 75).

2. Appareil à tube à rayons cathodiques selon la revendication 1, dans lequel le capteur de magnétisme terrestre (45 ; 45A) transmet un signal (S_{Z}) de magnétisme terrestre de direction d'axe du tube et un signal (S_{X}) de magnétisme terrestre de direction d'axe horizontal par détection des magnétismes terrestres dans la direction (Z) de l'axe du tube et la direction (X) de l'axe horizontal de la plaque avant (10) du tube à rayons cathodiques, les bobines de correction (41, 42) dans la direction d'un axe au moins comportent une bobine (41) de correction de direction d'axe du tube placée autour du voisinage d'une partie (33) de fixation de bande de renforcement et une bobine (42) de correction de direction d'axe horizontal placée horizontalement dans une partie d'entonnoir (34) du tube à rayons cathodiques en position opposée, et le signal (S_{Z}) de magnétisme terrestre de direction d'axe du tube est transmis à la bobine (41) de correction de direction d'axe du tube et le signal (S_{X}) de magnétisme terrestre de direction d'axe horizontal est transmis à la bobine (42) de correction de direction d'axe horizontal.

3. Appareil à tube à rayons cathodiques selon la revendication 1, dans lequel le capteur de magnétisme terrestre (45 ; 45A) transmet un signal (S_{Z}) de magnétisme terrestre de direction d'axe du tube, un signal (S_{X}) de magnétisme terrestre de direction d'axe horizontal et un signal (S_{Y}) de magnétisme terrestre de direction d'axe longitudinal par détection des magnétismes terrestres dans la direction (Z) de l'axe du tube, la direction (X) de l'axe horizontal et la direction (Y) de l'axe longitudinal de la plaque avant (10) du tube à rayons cathodiques, les bobines de correction (41, 42 ; 75) dans la direction d'au moins un axe comprennent une bobine (41) de correction de direction d'axe du tube placée à proximité autour d'une partie (33) de fixation de bande de renforcement, une bobine (42) de correction de direction d'axe horizontal disposée horizontalement dans une partie d'entonnoir (34) d'un tube à rayons cathodiques en poition opposée et une bobine (75) de correction de direction d'axe longitudinal disposée verticalement dans la partie d'entonnoir (34) en position opposée, et le signal (S_{Z}) de magnétisme terrestre de direction d'axe du tube est transmis à la bobine (41) de correction de direction d'axe du tube, le signal (S_{X}) de magnétisme terrestre de direction d'axe horizontal est transmis à la bobine (42) de correction de direction d'axe horizontal, et le signal (S_{Y}) de magnétisme terrestre de direction d'axe longitudinal est transmis à la bobine (75) de correction de direction d'axe longitudinal.

4. Appareil à tube à rayons cathodiques selon la revendication 1, dans lequel le tube à rayons cathodiques comporte un dispositif d'affichage, sur la plaque avant (10), d'une direction (80) qui dépend du signal de magnétisme terrestre.
